# EUROPEAN PATENT SPECIFICATION

(11) **EP 1 977 230 B1**
(45) Date of publication and mention of the grant of the patent: **01.08.2012**
(21) Application number: 05850992.8
(22) Date of filing: 29.12.2005
(51) Int. Cl.: G01N 29/04, G01N 29/265, G01N 29/22, G01N 29/32, G08C 17/02, G08C 23/00

(54) **Endosonic apparatus for the inspection of large size, hollow axis rotors**
Endosonikgerät für die Inspektion von grossen Hohlachsenrotoren
Appareil endosonique pour l'inspection de rotors de grande taille à axe creux

(43) Date of publication of application: 08.10.2008
(73) Proprietor: ANSALDO ENERGIA S.P.A., 16152 Genova (IT)
(72) Inventor: PIGNONE, Enrico, 16010 Rossiglione (IT)
(74) Representative: Jorio, Paolo
(86) International application number: PCT/IT2005/000778
(87) International publication number: WO 2007/074489

(56) References cited:
- EP-A- 0 251 698
- EP-A- 0 997 714
- US-A- 4 524 620
- US-A- 5 987 991
- US-A1- 2003 030 564
- PATENT ABSTRACTS OF JAPAN vol. 1998, no. 06, 30 April 1998 (1998-04-30) -& JP 10 038857 A (MITSUBISHI HEAVY IND LTD), 13 February 1998 (1998-02-13)

## Description

### TECHNICAL FIELD

The present invention relates to an ultrasound system for the automatical inspection of the structural integrity of large size rotors.

### BACKGROUND ART

As is known, large size rotors, typically used in machines such as steam turbines or alternators, are subjected to inspections to verify their structural integrity. Verification of integrity must be performed not only before installation but also after certain periods of operation, to prevent breakage which, although infrequent, may have disastrous effects.

Many possible defects of rotors are localised in proximity of the rotation axis, both due to the casting and cooling techniques used and to the stresses generating during operation. For this reason, steam turbine and alternator rotors, generally made as monolithic blocks, are provided with an inspection hole which extends longitudinally about the rotation axis (and are therefore called hollow axis rotors).

The integrity of rotors is verified using ultrasonic inspection devices, also called "endosonic" or "boresonic". The endosonic devices are provided with an ultrasonic probe coupled with an external processing unit and mounted on the head of a shaft, which is in turn carried by a frame. Handling members allow to turn and translate the shaft with respect to the frame, to introduce the ultrasonic probe inside a hollow axis rotor and to guide the probe itself, so as to scan the rotor for the entire length of the inspection hole.

Obviously, the ultrasonic probe must be communicably coupled to the processing unit so that it is possible to transfer the signals generated during measurements. To prevent twisting following the rotary movement of the shaft with respect to the frame, all the connecting wires between the processing unit and the probe are interrupted so that respective first segments of the wire, connected to the probe and accommodated inside the shaft, are integral with the shaft itself and respective second segments of wire, connected to the processing unit, are (angularly) integral with the frame and with the processing unit. The first and the second wire segments are electrically connected by means of sliding ring contacts or "slip rings". In practice, the sliding ring contacts comprise a plurality of conductive rings, fastened externally to the shaft and connected to respective first wire segments, and as many brushes, carried by the frame and connected to respective second wire segments. The brushes slide on the outer surface of respective conductive rings and ensure the electrical contact regardless of the rotation of the shaft.

The described solution is however not satisfactory. Indeed, the sliding ring contacts are important sources of interference and significantly decay the signal/noise ratio of the signals travelling along the connecting wires. In particular, the signals detected by the probe during the measurements made on the rotor are of the analogue type and often have very small amplitude. It is therefore evident that introducing a noise on the lines carrying such signals is particularly harmful, as it causes loss of important information concerning the rotor conditions.

EP-A-0 251 698 describes a boresonic inspection system having a shaft rotatably mounted on a frame and an ultrasonic probe carried by the shaft. The ultrasonic probe is controlled by a control unit to alternately send inspection signals and to supply return signals to the control unit in response to received reflected signals.

Another boresonic inspection system is described in JP 10 0388857 A

US 2003/030564 A1, EP-A-0 997 714, US-A 4 524 620 and US-A-5 987 991 disclose the use of telemetry systems in helicopters.

### DISCLOSURE OF INVENTION

It is an object of the present invention to provide an endosonic apparatus for inspecting large size rotors which is free from the above described drawbacks.

According to the present invention, an endosonic apparatus is provided, as defined in claim 1.

### BRIEF DESCRIPTION OF THE DRAWING

The present invention will now be described with reference to the accompanying drawings, which illustrate some non-limitative embodiment examples thereof, wherein:
- figure 1 is a simplified block diagram of an endosonic apparatus according to a first embodiment of the present invention;
- figure 2 is a side view of the endosonic apparatus in figure 1;
- figures 3a, 3b show signals related to the apparatus in figure 1;
- figure 4 is a magnified and partially sectional side view according to a longitudinal plane of a first detail of the endosonic apparatus as shown in figure 2;
- figure 5 is a magnified and partially sectional side view according to a longitudinal plane of a second detail of the endosonic apparatus as shown in figure 2;
- figure 6 shows a variant of the detail in figure 5;
- figure 7 is a simplified block diagram of an endosonic apparatus according to a second embodiment of the present invention;
- figure 8 is a side view of the endosonic apparatus in figure 7;
- figure 9 is a simplified block diagram of an endosonic apparatus according to a third embodiment of the present invention; and
- figure 10 is a side view, partially sectional, of a detail of the endosonic apparatus in figure 9.

### BEST MODE FOR CARRYING OUT THE INVENTION

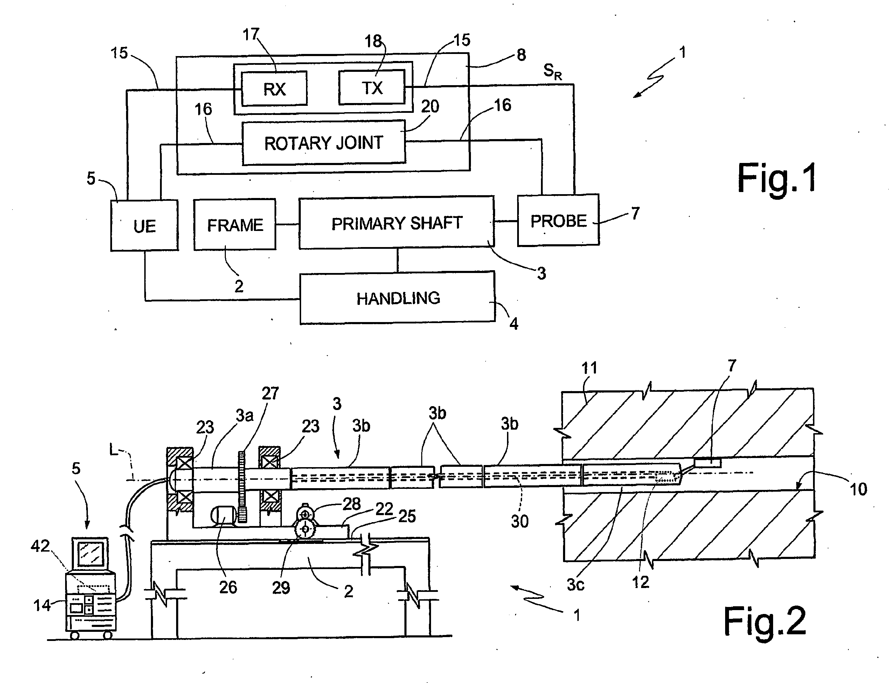

Referring to figures 1 and 2, an endosonic apparatus for inspecting large size hollow axis rotors, in particular of steam turbines and alternators, is indicated as a whole by number 1. The endosonic apparatus 1 comprises a frame 2, a primary shaft 3, handling members 4 of the primary shaft 3, a processing unit 5, an ultrasonic probe 7, and a connecting device for communicably coupling the probe 7 and the processing unit 5.

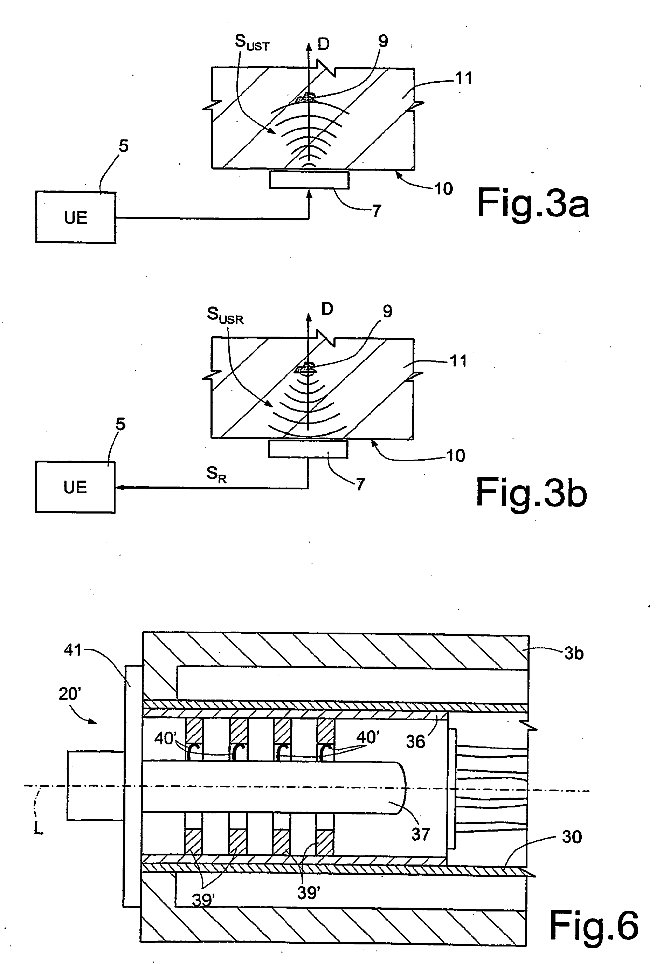

The probe 7 is accommodated in an end of the primary shaft 3, as shown in figure 2, to be introduced into an inspection hole 10 of a rotor 11, for example of a steam turbine (not shown in detail). The probe 7 is controlled by the processing unit 5 to alternatively generate the ultrasonic inspection signals S_{UST} (figure 3a), with an appropriate periodicity, and to send return signals S_{R} to the processing unit 5, in response to the reception of reflected ultrasonic signals S_{USR} reflected by discontinuities 9 arranged along a direction of propagation D of the ultrasonic inspection signals S_{UST} (figure 3b). Furthermore, an actuator 12, schematically shown in figure 2, is associated to the probe 7 to position the probe 7 against the surface of the inspection hole 10 with a predetermined pressure. Referring again to figure 1, the connecting device 8 connects the probe 7 and the actuator 12 to the processing unit 5, which is located outside the primary shaft 3 in a specific rack 14, preferably separate from the frame 2. The connection between the probe 7 and the processing unit 5 is used to transfer the return signals S_{R} and, furthermore, to provide supply voltages V_{A} and numeric control signals S_{R} to the probe 7 and to the actuator 12.

The connecting device 8 comprises a first wire connecting line 15, second wire connecting lines 16, a first and a second wireless connecting modules 17, 18, reciprocally communicably coupled, and a rotary electrical joint 20. As explained in detail below, the first and the second wireless connecting modules 17, 18, here of a radiofrequency type and preferably (but not necessary) bidirectional, are arranged along the first wire connecting line 15 for coupling a section of the first wire connecting line 15, angularly fixed and connected to the processing unit 5, with a section of the first wire connecting line 15, which is connected to the probe 7 and rotates with the primary shaft 3. In particular, the first and second wireless connecting modules 17, 18 are respectively associated to the processing unit 5 and to the probe 7 and are mutually coupled to transmit the return signals S_{R}. Similarly, the rotary electrical joint 20 is located along the second wire connecting lines 16 to couple sections of the second wire connecting lines 16, angularly fixed and connected to the processing unit 5, with sections of the second wire connecting lines 16, which are connected to the probe 7 and to the actuator 12 and rotate with the primary shaft 3. The second wire connecting lines 16 support the transmission of power voltages V_{A} and numeric control signals S_{C}.

Referring to figure 2, the primary shaft 3 is rotatably mounted on a table 22 by means of bearings 23. The table 22 is in turn supported by the frame 2 and is mounted so as to translate with respect to the frame 2 itself along a rack guide 25, straight and parallel to the longitudinal axis L of the primary shaft 3, which is also a rotation axis. Consequently, the primary shaft 3 can translate and turn about its longitudinal axis L with respect to the frame 2.

The primary shaft 3 is modular and comprises a drive element 3a, fitted on the bearings 23 and connected to the handling members 4, as explained below, and further comprises a plurality of extension elements 3b and a head 3c. The extension elements 3b are frontally coupled to the drive element 3a, to the head 3c, and to one another. Frontal coupling here and hereinafter means that the engagement direction for coupling is parallel to the longitudinal axis L of the primary shaft 3.

The head 3c supports the probe 7 and is adapted to be introduced inside the inspection hole 10 of the rotor 11. Furthermore, the actuator 12 is accommodated inside the head 3c of the primary shaft 3.

As mentioned above, the drive element 3a is connected to the handling members 4 of the primary shaft 3, which comprise a rotating motor 26, a toothed wheel 27, a translating motor 28 and a gear 29. The toothed wheel 27 is coaxially and angularly stationary mounted on the drive element 3a of the primary shaft 3 and is operated by the rotating motor 26 to rotate the primary shaft 3 (possibly, the toothed wheel and the drive element 3a may be made in one piece). The translating motor 28 is coupled to the rack guide 25 by means of the gear 29, for translating the table 22 parallel to the longitudinal axis of the primary shaft 3. The handling members 4 are controlled by the processing unit 5 (as schematically shown in figure 1) for translating and rotating the primary shaft 3 with respect to its longitudinal axis L and relative to the frame 2 (figure 2), so that the probe 7 travels along a helicoidal trajectory inside the inspection hole 10 of the rotor 11. Furthermore, the number of extension elements 3b of the primary shaft 3 is such to allow the probe 7 to travel the entire length of the inspection hole 10.

The primary shaft 3 is hollow and accommodates inside a coaxial secondary shaft 30. Between the probe 7 and the actuator 12 on one side and the second wireless connecting module 18 on the other, the first wire connecting line 15 and the second wire connecting lines 16 are placed inside the secondary shaft 30. In particular, the primary shaft 3 has a structural supporting function for the secondary shaft 30, the probe 7, the actuator 12 and the respective connections, and furthermore has the function of receiving a torque from the rotating motor 26. The secondary shaft 30 mainly has the function of facilitating the connection of the probe 7 and the actuator 12 with the processing unit 5.

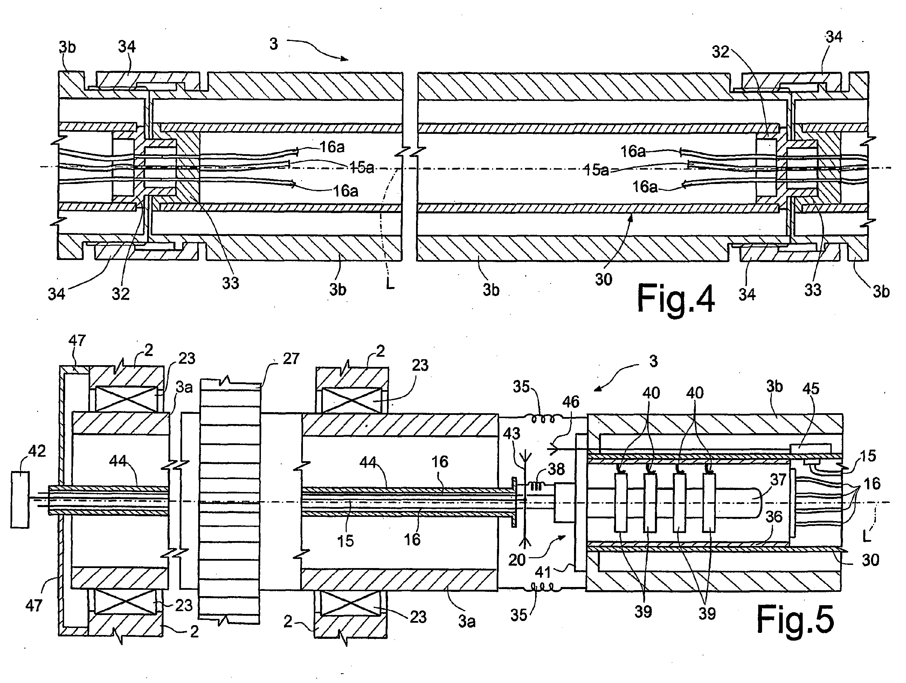

As shown in greater detail in figure 4, the extension elements 3b of the primary shaft 3 accommodate respective portions 30a of the secondary shaft 30 and, inside these, respective segments 15a, 16a of the first wire connecting line 15 and the second wire connecting lines 16. Connectors 32, 33 of the frontal bayonet engagement type allow to couple portions 30a of the secondary shaft 30, segments 15a, 16a of the first wire connecting line 15 and of the second wire connecting lines 16 accommodated in consecutive extension elements 3b. Preferably, the connectors 32, 33 have a circular section (not shown) and the contacts are arranged as a crown. Consecutive extension elements 3b are also fastened onto each other by means of threaded rings 34. Preferably, the first wire connecting line 15 comprises a coaxial wire, whose use is compatible with the type of connection described. Furthermore, in all extension elements 3b, the connectors 32, 33 and at least the segments 15a of the first wire connecting line 15 are matched to same impedance. Therefore, the number of extension elements 3b used only affects the attenuation level, which is easily predictable, while it is essentially free from effects, as far as possible impedance mismatching or signal distortions are concerned.

Figure 5 shows in detail the coupling between the drive element 3a of the primary shaft 3 and the extension element 3b consecutive thereto. From a mechanical point of view, the coupling is obtained by torsional springs 35, which transmit the torque from the drive element to the extension element 3b, while allowing axial adjustment.

From an electrical point of view, the rotary electrical joint 20 ensures continuity of the second wire connecting lines 16 by means of sliding ring contacts or "slip rings". In particular, the rotary electrical joint 20 comprises a cylindrical casing 36, in which a spindle 37 is idly inserted, a plurality of conductive rings 39, fastened to the spindle 37 inside the cylindrical casing 36, and as many brushes 40, carried by the cylindrical casing 36 and slidably coupled each to a respective conductive ring 39.

In a known way not shown in figure 5, each second wire connecting line 16 is connected to a conductive ring 39, on the side of the processing unit 5, and to a corresponding brush 40, on the side of the probe 7 and of the actuator 12. Furthermore, one end of the secondary shaft 30 is fitted on the cylindrical casing 36, against a flange 41 of the latter (clearly, the diameter of the conductive rings 39 is smaller than that of the secondary shaft 30). Therefore, the cylindrical casing 36 and the brushes 40 are angularly fastened to the secondary shaft 30, which draws them into rotation.

On the other hand, a hollow lead-in portion of the spindle 37 protrudes towards the drive element 3a of the primary shaft 3 and is connected, through a further torsional spring 38, to a duct 44, which is accommodated inside the drive element 3a and is in turn rigidly connected to the frame 2, for example by brackets 47. Consequently, the spindle 37 is essentially fixed with respect to the frame 2 during the rotation of the primary shaft 3 and of the secondary shaft 30.

Alternatively, figure 6, in a rotary electrical joint 20', brushes 40' are fitted on the spindle 37 and conductive rings 39' are fastened inside the cylindrical casing 36. In this case, the cylindrical casing 36 and the conductive rings 39' are angularly fastened to the secondary shaft 30, while the brushes 40' are free to rotate with respect both to the secondary shaft 30, and to the primary shaft 3.

Referring again to figure 5, the first wireless connecting module 17 comprises a first interface circuit 42, incorporated in the processing unit 5, and a first antenna 43, which in the embodiment here described is supported by the duct 44 and fastened with respect to the frame 2. Furthermore, the first antenna 43 is essentially symmetric with respect to the longitudinal axis L of the primary shaft 3. In practice, the first antenna 43 and the primary shaft 3 are essentially coaxial. The sections of the first wire connecting line 15 and of the second wire connecting lines 16 arranged on the side of the processing unit 5 are accommodated in the duct 44 and protrude from one end of the primary shaft 3 opposite to the head 3c. The second wireless connecting module 18 comprises a second interface circuit 45, carried by the secondary shaft 30 in proximity of the rotary electrical joint 20, and a second antenna 46 associated to the second interface circuit 45. In the embodiment described herein, the second antenna 46 is located on the flange 41 of the electrical rotary joint 20 and therefore rotates about the longitudinal axis L along with the primary shaft 3 and the secondary shaft 30, to which it is angularly fastened. Furthermore, the second antenna 46 faces the drive element 3a of the primary shaft 3 and is arranged so as to remain, during rotation about the longitudinal axis L, inside the volume covered by the radiation diagram of the first antenna 43.

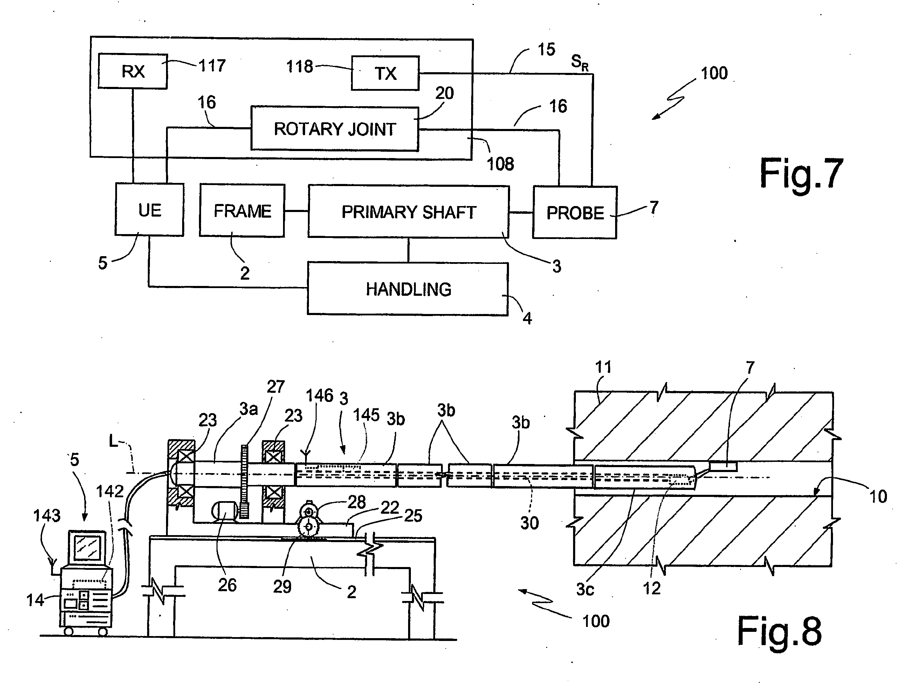

A second embodiment of the invention is shown in figures 7 and 8, where parts similar to those previously illustrated are indicated with the same reference numbers. In this case, an endosonic apparatus 100 has essentially the structure of the endosonic apparatus 1 in figures 1-5 and comprises the frame 2, the primary shaft 3, inside which is placed the secondary shaft 30, the handling members 4, the processing unit 5, the probe 7, and a connecting device 108 for communicably coupling the probe 7 and the processing unit 5. In particular, the connecting device 108 comprises the wire connecting lines 15, 16 and a first and second wireless connecting modules 117, 118 mutually coupled. The first wireless connecting device 117 comprises a first interface circuit 142 and a first antenna 143, both carried by the rack 14 in the processing unit 5. The second wireless connecting device 118 comprises a second interface circuit 145, fastened to the secondary shaft 30, and a second antenna 146 radially protruding outside the primary shaft 3.

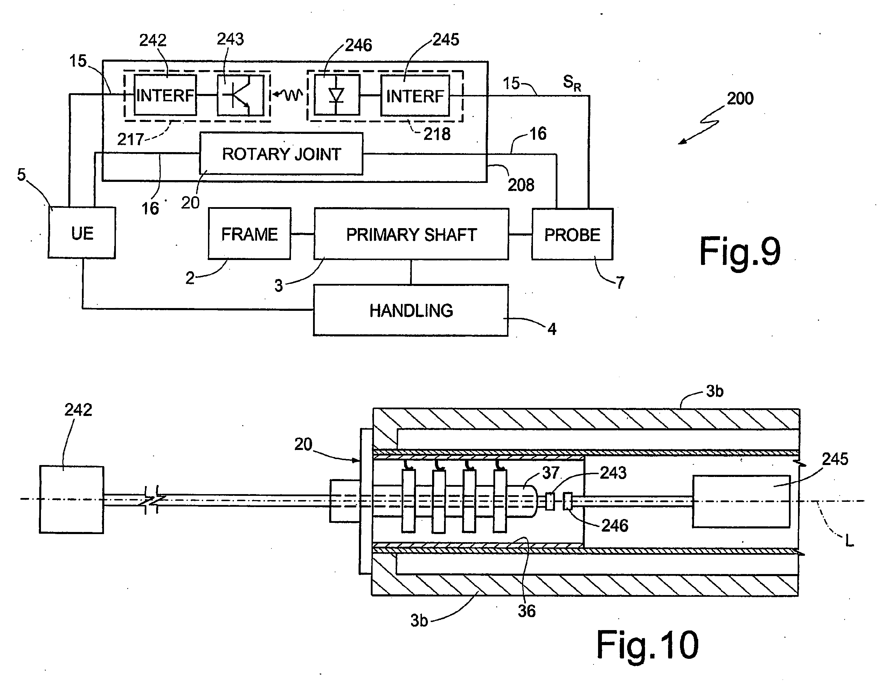

According to a third embodiment of the invention, shown in figures 9 and 10, an endosonic apparatus 200 comprises the frame 2, the primary shaft 3, inside which the secondary shaft 30 is arranged, the handling members 4, the processing unit 5, the probe 7, and a connecting device 208 for communicably coupling the probe 7 and the processing unit 5.

The connecting device 208 comprises the wire connecting lines 15, 16 and a first and second wireless connecting modules 217, 218, of an optical type, mutually coupled. The first wireless connecting device 217 comprises a first interface circuit 242, placed in the rack 14 (not shown here), and a photo detector 243, for example a photo transistor, both of the processing unit 5. The second wireless connecting device 218 comprises a second interface circuit 245, accommodated inside the secondary shaft 30, and a light source 246, for example a LED, controlled by the second interface circuit 245 according to the electrical return signals S_{R}. The light source 246 and the photo detector 243 are arranged along the longitudinal axis L of the primary shaft 3 and are optically coupled. More precisely, the photo detector 243 protrudes from the spindle 37 of the electrical rotary joint 20 towards the inside of the cylindrical casing 36 and is connected to the processing unit 5 by means of wires, not shown in detail, passing through the spindle 37. The light source 246 is also placed inside the cylindrical casing 36, at a short distance from the photo detector 243.

Advantageously, the use of wireless connecting modules along the line which transmits the return signals allows to eliminate the sliding contacts and therefore one of the major sources of noise. The signals which carry useful diagnostic information have therefore high quality and, in particular, a very favourable signal/noise ratio. The use of a coaxial wire for carrying out the first wire connecting line also contributes to this.

The numeric control signals of the actuator and the probe, which are transmitted through the rotary electrical joint, are of the digital type and are far less critical. For example, such signals may be encoded by means of error correction codes. By associating a minimum processing capacity to the probe and to the actuator, possible errors due to interference may be detected and corrected, or it may be possible to send a request for transmitting corrupted data again to the processing unit.

The use of two coaxial shafts, one of which is intended to transmit motion and the other intended exclusively to accommodate and mutually connect portions of the wire connecting lines, allows to simplify connecting the extension elements and, furthermore, allows to use rotary electrical joints having extremely reduced dimensions. This is advantageous not only for the smaller dimensions, but above all from an electrical point of view because the band capacity and the sensitivity towards interference are strongly influenced by the dimensions of the ring contacts, in addition to the materials. Indeed, the ring contacts form spirals and therefore are as vulnerable to electromagnetic interference as wider their diameter is. The electrical rotary joints of the type described have ring accommodated inside the secondary shaft and therefore of considerably smaller diameter with respect to the ring contacts used in known endosonic apparatuses (outside the single shaft, of dimensions comparable with those of the primary shaft of the apparatus according to the invention).

## Claims

1. An endosonic apparatus for inspecting large size hollow axis rotors, comprising:
a frame (2);
a primary shaft (3), rotatably mounted on said frame (2);
a processing unit (5) external to said primary shaft (3);
an ultrasonic probe (7) arranged at one end of said primary shaft (3) and alternatively controlled for generating ultrasonic inspection signals (S_{UST}) and for sending to said processing unit (5) return signals (S_{R}),
in response to the reception of ultrasonic signals (S_{USR}) reflected by discontinuities (9) placed along a direction of propagation (D) of said ultrasonic inspection signals (S_{UST}) ; and
a connecting device (8; 108; 208) for communicably coupling said ultrasonic probe (7) to said processing unit (5);
**characterised by** a secondary shaft (30), coaxially mounted inside said primary shaft (3), and wire connecting means (15, 16) accommodated inside said secondary shaft (30);
wherein said connecting device (8; 108; 208) comprises a first and a second wireless communication module (17, 18; 117, 118; 217, 218) respectively associated to said processing unit (5) and to said ultrasonic probe (7) and mutually communicably coupled to transmit at least said return signals (S_{R}); and
wherein said wire connecting means (15, 16) comprise a first wire connecting line (15) for connecting said ultrasonic probe (7) to said second communication module (18; 118; 218) and for connecting said processing unit (5) to said first wireless communication module (17; 117; 217), and second wire connecting lines (16) for transferring control signals between said processing unit (5) and said ultrasonic probe (7);
the apparatus further comprising a rotary electrical joint (20) along said second wire connecting lines (16), for connecting said second wire connecting lines (16) to said processing unit (5).

2. An apparatus according to claim 1, wherein said first and second wireless communication modules are of the radiofrequency type (17, 18; 117, 118).

3. An apparatus according to claim 2, wherein said first wireless communication module (17) comprises a first antenna (43) substantially coaxial to said primary shaft (3) and fixed with respect to said frame (2) and wherein said second wireless communication module (18) comprises a second antenna (46) angularly fastened to said primary shaft (3).

4. An apparatus according to claim 1, wherein said first and second wireless communication modules are of the optical type (217, 218).

5. An apparatus according to claim 4, wherein said second wireless communication module (218) comprises a light source (246) controlled according to said return electric signals (S_{R}) and said first wireless communication module (217) comprises a photo detector (243) optically coupled to said light source (246), and wherein said light source (246) and said photo detector (243) are coaxial to said primary shaft (3).

6. An apparatus according to any of the preceding claims, wherein said first and second wireless communication modules are bidirectional (17, 18; 117, 118; 217, 218).

7. An apparatus according to any one of the preceding claims, wherein said primary shaft (3) comprises a plurality of extension elements (3b), accommodating respective portions of said secondary shaft (30) and respective sections of said wire connecting means (15, 16) inside said portions of said secondary shaft (30).

8. An apparatus according to claim 7, wherein said extension elements (3b) are frontally coupled.

9. An apparatus according to claim 7 or 8, wherein said extension elements (3b) comprise frontal engagement connectors (32,33) for coupling said portions of said secondary shaft (30) and respective sections of said wire connecting means (15, 16) accommodated in consecutive extension elements (3b).

10. An apparatus according to any one of the preceding claims, wherein said rotary electrical joint (20) is radially accommodated inside said primary shaft (3).

11. An apparatus according to any one of the preceding claims, wherein said rotary electrical joint (20) comprises ring contact members (39) and brush contact members (40) and wherein said ring contact members (39) are angularly integral with said frame (2) and said brush contact members (40) are angularly integral with said secondary shaft (30).

12. An apparatus according to any one of claims 1 to 10, wherein said rotary electrical joint (20) comprises ring contact members (39') and brush contact members (40') and wherein said ring contact members (39') are angularly integral with said secondary shaft (30) and said brush contact members (40') are angularly integral with said frame (2).

13. An apparatus according to claim 11 or 12, wherein said rotary electrical joint (20) comprises a casing (36) accommodating said ring contact members (39, 39') and said brush contact members (40, 40') and wherein said secondary shaft (30) has an end fitted on said casing (36).

14. An apparatus according to any of the preceding claims, comprising handling means (4) associated to said primary shaft (3), to translate and rotate said primary shaft (3) with respect to its longitudinal axis (L) and relative to said frame (2), so that said ultrasonic probe (7) travels a helicoidal path.

## Patentansprüche

1. Endosonikvorrichtung zum Überprüfen von großen Hohlachsenrotoren, aufweisend:
einen Rahmen (2);
eine Hauptwelle (3), die drehbar an dem Rahmen (2) befestigt ist;
eine Bearbeitungseinheit (5), die außerhalb der Hauptwelle (3) angeordnet ist;
eine Ultraschallprobe (7), die an einem Ende der Hauptwelle (3) angeordnet ist und wechselseitig gesteuert wird zum Erzeugen von Ultraschall-Prüfsignalen (S_{UST}) und zum Senden von Echosignalen (S_{R}) an die Bearbeitungseinheit (5), und zwar in Antwort auf den Empfang von Ultraschallsignalen (S_{USR}), die an Diskontinuitäten (9), die sich entlang einer Ausbreitungsrichtung (D) der Ultraschallprüfsignale (S_{UST}) befinden, reflektiert werden; und
eine Verbindungseinrichtung (8; 108; 208) zum kommunikationsfähigen Koppeln der Ultraschallprobe (7) mit der Bearbeitungseinheit (5);
**gekennzeichnet durch** eine sekundäre Welle (30), die koaxial innerhalb der Hauptwelle (3) befestigt ist, und ein Drahtverbindungsmittel (15, 16), das innerhalb der sekundären Welle (30) untergebracht ist;
wobei die Verbindungseinrichtung (8; 108; 208) ein erstes und ein zweites drahtloses Kommunikationsmodul (17, 18; 117, 118; 217, 218) aufweist, die jeweils der Bearbeitungseinheit (5) und der Ultraschallprobe (7) zugeordnet sind und gegenseitig und kommunikationsfähig miteinander gekoppelt sind, um zumindest die Echosignale (S_{R}) zu übertragen; und
wobei das Drahtverbindungsmittel (15, 16) eine erste Drahtverbindungsleitung (15) zum Verbinden der Ultraschallprobe (7) mit dem zweiten Kommunikationsmodul (18; 118; 218) und zum Verbinden der Bearbeitungseinheit (5) mit dem ersten drahtlosen Kommunikationsmodul (17; 117; 217) und zweite Drahtverbindungsleitungen (16) zum Übermitteln der Steuersignale zwischen der Bearbeitungseinheit (5) und der Ultraschallprobe (7) aufweist;
wobei die Vorrichtung des Weiteren eine rotierende elektrische Verbindung (20) entlang der zweiten Drahtverbindungsleitungen (16) aufweist zum Verbinden der zweiten Drahtverbindungsleitungen (16) mit der Bearbeitungseinheit (5).

2. Vorrichtung nach Anspruch 1, wobei das erste und das zweite drahtlose Kommunikationsmodul vom Radiofrequenz-Typ (17, 18; 117, 118) sind.

3. Vorrichtung nach Anspruch 2, wobei das erste drahtlose Kommunikationsmodul (17) eine erste Antenne (43) aufweist, die im Wesentlichen koaxial zu der Hauptwelle (3) ist und in Bezug auf den Rahmen (2) fixiert ist, und wobei das zweite drahtlose Kommunikationsmodul (18) eine zweite Antenne (46) aufweist, die abgewinkelt zu der Hauptwelle (3) angebracht ist.

4. Vorrichtung nach Anspruch 1, wobei das erste und das zweite drahtlose Kommunikationsmodul vom optischen Typ (217, 218) sind.

5. Vorrichtung nach Anspruch 4, wobei das zweite drahtlose Kommunikationsmodul (218) eine Lichtquelle (246) aufweist, die entsprechend der elektrischen Echosignale (S_{R}) gesteuert wird, und wobei das erste drahtlose Kommunikationsmodul (217) einen Photodetektor (243) aufweist, der optisch mit der Lichtquelle (246) gekoppelt ist, und wobei die Lichtquelle (246) und der Photodetektor (243) koaxial zu der Hauptwelle (3) sind.

6. Vorrichtung nach einem der vorhergehenden Ansprüche,
wobei das erste und das zweite drahtlose Kommunikationsmodul bi-direktional (17, 18; 117, 118, 217, 218) sind.

7. Vorrichtung nach einem der vorhergehenden Ansprüche, wobei die Hauptwelle (3) eine Vielzahl von Extensionselementen (3b) aufweist, in denen jeweilige Abschnitte der sekundären Welle (30) und jeweilige Bereiche des Drahtverbindungsmittels (15, 16) innerhalb der Abschnitte der sekundären Welle (30) untergebracht sind.

8. Vorrichtung nach Anspruch 7, wobei die Extensionselemente (3b) vorderseitig gekoppelt sind.

9. Vorrichtung nach Anspruch 7 oder 8, wobei die Extensionselemente (3b) vorderseitige Eingriffsverbinder (32, 33) aufweisen zum Koppeln der Abschnitte der sekundären Welle (30) und der jeweiligen Bereiche des Drahtverbindungsmittels (15, 16), die in aufeinanderfolgenden Extensionselementen (3b) untergebracht sind.

10. Vorrichtung nach einem der vorhergehenden Ansprüche, wobei die rotierende elektrische Verbindung (20) in radialer Richtung innerhalb der Hauptwelle (3) untergebracht ist.

11. Vorrichtung nach einem der vorhergehenden Ansprüche, wobei die rotierende elektrische Verbindung (20) Ringkontaktelemente (39) und Bürstenkontaktelemente (40) aufweist, und wobei die Ringkontaktelemente (39) integral mit und abgewinkelt zu dem Rahmen (2) ausgebildet sind und die Bürstenkontaktelemente (40) integral mit und abgewinkelt zu der sekundären Welle (30) ausgebildet sind.

12. Vorrichtung nach einem der Ansprüche 1 bis 10, wobei die rotierende elektrische Verbindung (20) Ringkontaktelemente (39') und Bürstenkontaktelemente (40') aufweist, und wobei die Ringkontaktelemente (39') integral mit und abgewinkelt zu der sekundären Welle (30) ausgebildet sind und die Bürstenkontaktelemente (40') integral mit und abgewinkelt zu dem Rahmen (2) ausgebildet sind.

13. Vorrichtung nach Anspruch 11 oder 12, wobei die rotierende elektrische Verbindung (20) ein Gehäuse (36) aufweist, in dem die Ringkontaktelemente (39, 39') und die Bürstenkontaktelemente (40, 40') untergebracht sind, und wobei die sekundäre Welle (30) ein Ende besitzt, das an dem Gehäuse (36) angebracht ist.

14. Vorrichtung nach einem der vorhergehenden Ansprüche, aufweisend Handhabungsmittel (4), die der Hauptwelle (3) zugeordnet sind, um die Hauptwelle (3) in Bezug auf ihre longitudinale Achse (L) und relativ zu dem Rahmen (2) zu translatieren und zu rotieren, so dass die Ultraschallprobe (7) sich entlang einer spindelförmigen Bahn bewegt.

## Revendications

1. Appareil endosonique pour l'inspection de rotors de grande taille à axe creux, comprenant :
un châssis (2) ;
un arbre (3) primaire, monté en rotation sur ledit châssis (2) ;
une unité (5) de traitement à l'extérieur dudit arbre (3) primaire ;
une sonde (7) ultrasonore agencée sur une extrémité dudit arbre (3) primaire et commandée pour la génération alternée de signaux (S_{UST}) d'inspection ultrasonores et pour envoyer à ladite unité (5) de traitement des signaux (S_{R}) de retour, en réponse à la réception de signaux (S_{USR}) ultrasonores réfléchis par des discontinuités (9) placées le long d'une direction de propagation (D) desdits signaux (S_{UST}) d'inspection ultrasonores ; et
un dispositif (8 ; 108 ; 208) de connexion pour le couplage en communication de ladite sonde (7) ultrasonore à ladite unité (5) de traitement ;
**caractérisé par** un arbre (30) secondaire, monté de manière coaxiale à l'intérieur dudit arbre (3) primaire, et un moyen (15, 16) de connexion de fil logé à l'intérieur dudit arbre (30) secondaire ;
dans lequel ledit dispositif (8 ; 108 ; 208) de connexion comprend un premier et un deuxième module (17, 18 ; 117, 118 ; 217, 218) de communication sans fil respectivement associés à ladite unité (5) de traitement et à ladite sonde (7) ultrasonore et couplés l'un à l'autre pour la transmission d'au moins lesdits signaux (S_{R}) de retour ; et
dans lequel ledit moyen (15, 16) de connexion de fil comprend une première ligne (15) de connexion de fil pour relier ladite sonde (7) ultrasonore audit deuxième module (18 ; 118 ; 218) de communication et pour relier ladite unité (5) de traitement audit premier module (17 ; 117 ; 217) de communication sans fil, et des deuxièmes lignes (16) de connexion de fil pour transférer des signaux de commande entre ladite unité (5) de traitement et ladite sonde (7) ultrasonore ;
l'appareil comprenant en outre un joint (20) électrique tournant le long desdites deuxièmes lignes (16) de connexion de fil, pour relier lesdites deuxièmes lignes (16) de connexion de fil à ladite unité (5) de traitement.

2. Appareil selon la revendication 1, dans lequel lesdits premier et deuxième modules de communication sans fil sont du type (17, 18 ; 117, 118) radiofréquence.

3. Appareil selon la revendication 2, dans lequel ledit premier module (17) de communication sans fil comprend une première antenne (43) sensiblement coaxiale audit arbre (3) primaire et fixée par rapport audit châssis (2) et dans lequel ledit deuxième module (18) de communication sans fil comprend une deuxième antenne (46) angulairement attachée audit arbre (3) primaire.

4. Appareil selon la revendication 1, dans lequel lesdits premier et deuxième modules de communication sans fil sont du type (217, 218) optique.

5. Appareil selon la revendication 4, dans lequel ledit deuxième module (218) de communication sans fil comprend une source (246) de lumière commandée en fonction desdits signaux (S_{R}) électriques de retour et ledit premier module (217) de communication sans fil comprend un photo-détecteur (243) optiquement couplé à ladite source (246) de lumière, et dans lequel ladite source (246) de lumière et ledit photo-détecteur (243) sont coaxiaux audit arbre (3) primaire.

6. Appareil selon l'une des revendications précédentes, dans lequel lesdits premier et deuxième modules de communication sans fil sont bidirectionnels (17, 18 ; 117, 118 ; 217, 218).

7. Appareil selon l'une quelconque des revendications précédentes, dans lequel ledit arbre (3) primaire comprend une pluralité d'éléments (3b) d'extension, logeant des parties respectives dudit arbre (30) secondaire et des sections respectives dudit moyen (15, 16) de connexion de fil à l'intérieur desdites parties dudit arbre (30) secondaire.

8. Appareil selon la revendication 7, dans lequel lesdits éléments (3b) d'extension sont couplés frontalement.

9. Appareil selon la revendication 7 ou 8, dans lequel lesdits éléments (3b) d'extension comprennent des connecteurs (32,33) d'engagement frontal pour le couplage desdites parties dudit arbre (30) secondaire et des sections respectives dudit moyen (15, 16) de connexion de fil logées dans des éléments (3b) d'extension consécutifs.

10. Appareil selon l'une quelconque des revendications précédentes, dans lequel ledit joint (20) électrique tournant est radialement logé à l'intérieur dudit arbre primaire (3).

11. Appareil selon l'une quelconque des revendications précédentes, dans lequel ledit joint (20) électrique tournant comprend des éléments (39) de contact fileté et des éléments (40) de contact par balai et dans lequel lesdits éléments (39) de contact fileté sont solidarisés angulairement audit châssis (2) et lesdits éléments (40) de contact par balai sont angulairement solidarisés audit arbre (30) secondaire.

12. Appareil selon l'une quelconque des revendications 1 à 10, dans lequel ledit joint (20) électrique tournant comprend des éléments (39') de contact fileté et des éléments (40') de contact par balai et dans lequel lesdits éléments (39') de contact fileté sont solidarisés angulairement avec ledit arbre (30) secondaire et lesdits éléments (40') de contact par balai sont solidarisés angulairement audit châssis (2).

13. Appareil selon la revendication 11 ou 12, dans lequel ledit joint (20) électrique tournant comprend un boîtier (36) logeant lesdits éléments (39, 39') de contact fileté et lesdits éléments (40, 40') de contact par balai et dans lequel ledit (30) arbre secondaire a une extrémité montée sur ledit boîtier (36).

14. Appareil selon l'une des revendications précédentes, comprenant un moyen (4) de manutention associé audit arbre (3) primaire, pour translater et faire tourner ledit arbre (3) primaire par rapport à son axe (L) longitudinal et par rapport audit châssis (2), de sorte que ladite sonde ultrasonore (7) se déplace dans une trajectoire hélicoïdale.
